(19) **Europäisches Patentamt**
**European Patent Office**
**Office européen des brevets**

(11) **EP 1 544 785 B1**

(12) **EUROPEAN PATENT SPECIFICATION**

(45) Date of publication and mention
of the grant of the patent:
**24.01.2007 Bulletin 2007/04**

(51) Int Cl.:
**G06K 19/00** (2006.01)     **G06K 19/06** (2006.01)
**G06K 7/00** (2006.01)

(21) Application number: **03741383.8**

(22) Date of filing: **14.07.2003**

(86) International application number:
**PCT/JP2003/008938**

(87) International publication number:
**WO 2004/019266 (04.03.2004 Gazette 2004/10)**

(54) **INFORMATION DISPLAYING-DEVICE AND OPTICAL INFORMATION-READING DEVICE**

INFORMATIONSANZEIGEGERÄT UND OPTISCHER INFORMATIONSLESER

DISPOSITIF D'AFFICHAGE D'INFORMATIONS ET DISPOSITIF DE LECTURE OPTIQUE D'INFORMATIONS

(84) Designated Contracting States:
**DE GB**

(30) Priority: **23.08.2002 JP 2002243143**
**23.08.2002 JP 2002243144**

(43) Date of publication of application:
**22.06.2005 Bulletin 2005/25**

(73) Proprietor: **Tsumura Research Institute Co.**
**Osaka-shi,**
**Osaka 558-0014 (JP)**

(72) Inventor: **TSUMURA, Toshihiro**
**Osaka-shi, Osaka 558-0014 (JP)**

(74) Representative: **Hofer, Dorothea et al**
**Prüfer & Partner GbR**
**Patentanwälte**
**Sohnckestrasse 12**
**81479 München (DE)**

(56) References cited:
WO-A-01/80175          JP-A- 4 075 189
JP-A- 4 239 697         JP-A- 5 282 504
JP-A- 10 171 952        US-A- 4 544 836

EP 1 544 785 B1

**Description**

Technical Field

The present invention relates to an information display apparatus optically transmitting coded information and to an apparatus optically reading information from the information display apparatus. More specifically, the present invention relates to a technique that enables reliable reading of information while improving visual impression of the information display apparatus.

Background Art

WO 01/80175 A1 describes a surface pattern in the form of a visually perceptive mosaic comprising a number of surface portions, at least one of which is occupied by a microscopic relief structure, which is at least partially covered with a reflection layer.

US 4,544,836 discloses an optically-based access control system wherein a card having an access code defined by adjacent differently polarized elements used in a transmissive or reflective mode is interrogated through a deep red or near infrared transmissive filter as the card is passed by a source of illumination.

JP 10-171952 provides a barcode showing a high S/N, having a fine sensitivity and capable of sufficiently coping with a recording with a high recording density by including an organic compound having an angle of rotation, detecting the angle of rotation and making information be readable.

JP 04-075189 discloses a polarization recording slip, wherein a polarizing plate consists of a polarization part and a non-polarization part. The polarization part transmits only a wave having a plane of polarization in a specific direction among laser beams emitted from a laser, when information is read. The non-polarization part interrupts the transmission of waves having planes of polarization in other directions. Thus, the polarization phenomenon is utilized to record the information. This prior art is acknowledged in the preamble of claims 1 and 7.

A technique of attaching bar codes representing product codes on corresponding products beforehand, optically reading the bar codes and retrieving product-related information from a data base or the like has been widely used. One example is the POS (Point of Sales) system, in which bar codes are attached to product tags of products sold at a supermarket, and the bar codes are read by a register machine and registered. Wide spread use of the POS system eliminated the necessity of code input by an operator, and the input itself became more reliable. Such a technique is used in various fields of commodity management, including books, clothes and groceries.

Application of bar codes, however, is not limited to such commodity management. For instance, the following usage of bar codes has been adopted in museums and art galleries. In a museum, for example, a bar code representing a code corresponding to a work of art is provided near the exhibited work of art. At the reception of the museum, an information terminal providing information related to exhibited works of art is prepared, and is handed to a visitor. Descriptions of each of the works of art are prepared as data in advance and stored in correspondence to the codes of respective works, in the information terminal. Further, the information terminal has a bar code reader capable of optically reading the bar code mounted thereon. The visitor strolls in the museum with the information terminal in his/her hand, and when he/she finds an interesting work, scans a bar code provided on the side of the work, and reads the bar coded information by the information terminal. Then, the information terminal retrieves the description of the work corresponding to the code specified by the read bar coded information from a storage device, and displays the description on a display.

Such a system makes it possible to present appropriate description of each of the works of art to the visitor, without the necessity of preparing and placing panels on which descriptions of respective works are written.

Such a system may be used not only to present descriptions of art works but also to provide routing assistance in the museum or art gallery.

A bar code, however, consists of cold stripes of white and black (or similar dark color), and not esthetically appealing. Placing a bar code as such close to a work of art in a museum is not preferable, though it might be helpful for the visitor. Conventionally, no consideration has been made as to how such a bar code might be used to provide necessary information without spoiling the artistic atmosphere. Such a problem turns up not only in bar codes but also in information display apparatuses as a whole that display coded information by similar optical processing.

Further, when a user scans the code with the information terminal held in his/her hand, the scanning direction may not be always stable. If the bar code is placed to be read by horizontal scanning and the scanning direction deviates from the horizontal direction, the information would not be correctly read. Such a problem is encountered not only where the bar code is fixed and scanned by hand but also where a scanner is fixed and an object with a bar code swings.

Disclosure of the Invention

Therefore, an object of the present invention is to provide an information display apparatus having more preferable appearance.

Another object of the present invention is to provide an information display apparatus having a less tasteless appearance.

A further object of the present invention is to provide an optical information reading apparatus capable of correctly reading contents displayed by an optical information display apparatus even when positional relation between a scanner and the optical information display apparatus such as a bar code varies.

An additional object of the present invention is to provide an optical information reading apparatus capable of correctly reading contents displayed by an optical information display apparatus such as a bar code even when the direction of light scanning the optical information display apparatus slightly deviates from the intended direction.

A still further object of the present invention is to provide an optical information reading apparatus capable of correctly reading contents displayed by an optical information display apparatus such as a bar code even when scanning direction is deviated to some extent from the horizontal direction.

The object is achieved by an information display device according to claims 1 and 7 and an optical information reading device according to claim 11.

Further developments of the invention are described in the subclaims.

Brief Description of the Drawings

Fig. 1 is a schematic diagram of a system in accordance with a first embodiment of the present invention.

Fig. 2 shows an appearance of a bar code apparatus used in the system in accordance with the first embodiment of the present invention.

Fig. 3 is a cross-sectional view of the bar code apparatus used in the system in accordance with the first embodiment of the present invention.

Fig. 4 schematically shows an arrangement of polarizing plates and the like on the bar code apparatus used in the system in accordance with the first embodiment of the present invention, and a relation between the arrangement and information obtained by the light reflected therefrom.

Fig. 5 is a block diagram of a portable information terminal used in the system in accordance with the first embodiment of the present invention.

Fig. 6 shows a scope of scanning direction to be the object of processing by the system in accordance with the first embodiment.

Fig. 7 shows a principle of determining a scan direction inclination by the system in accordance with the first embodiment.

Fig. 8 is a flow chart of a program realizing the first embodiment.

Fig. 9 is a flow chart of a process for determining a photo sensor pair used for code determination.

Fig. 10 is a block diagram of a portable information terminal used in a system in accordance with a second embodiment of the present invention.

Fig. 11 schematically shows a table used when a code is determined by the system in accordance with the second embodiment of the present invention.

Fig. 12 schematically shows an arrangement of polarizing plates and the like on the bar code apparatus used in the system in accordance with the second embodiment of the present invention, and a relation between the arrangement and information obtained by the light reflected therefrom.

Fig. 13 is a flow chart of a program realizing the second embodiment.

Fig. 14 is a flow chart of a process for determining a table used for code determination.

Fig. 15 is a block diagram of a portable information terminal used in a system in accordance with a third embodiment of the present invention.

Best Modes for Carrying Out the Invention

[First embodiment]

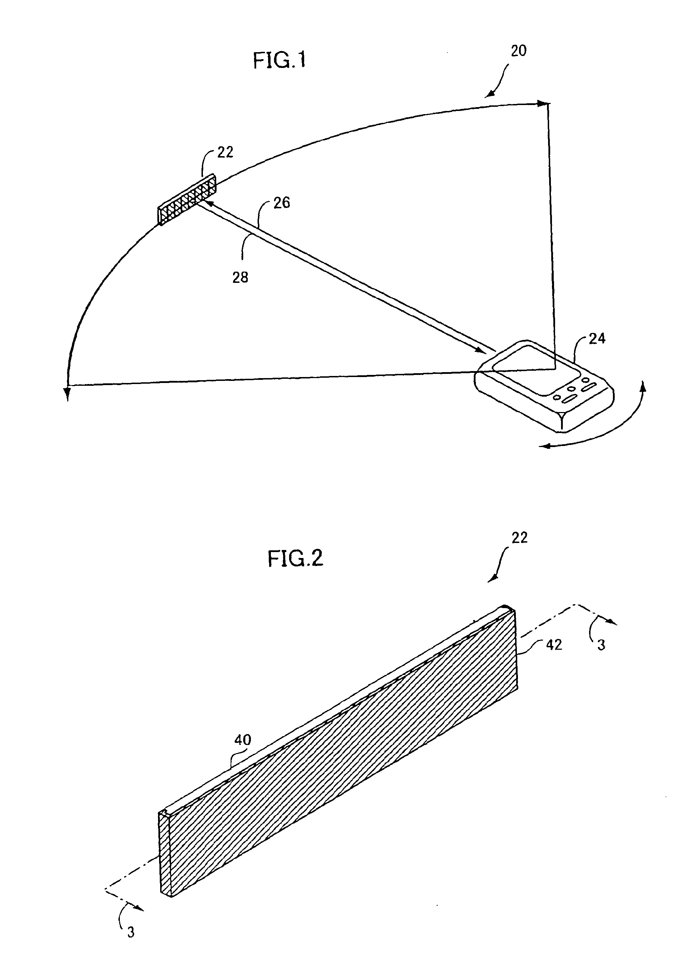

Fig. 1 is a schematic diagram showing the bar code system in accordance with the first embodiment of the present invention. Referring to Fig. 1, system 20 includes a bar code apparatus 22 and a portable information terminal 24. Portable information terminal 24 is capable of emitting a laser beam 26. In the present system, a user moves portable information terminal 24 in a horizontal direction by his/her hand, so that laser beam 26 scans a space, light 28 reflected from bar code apparatus 22 returns to portable information terminal 24, and portable information terminal 24 can read a code represented by bar code apparatus 22. Based on the read code, information stored in advance in portable information terminal 24 is searched for, retrieved and displayed on a display apparatus. Though a laser beam is used in the present embodiment, a common light beam may be used

As shown in Fig. 2, the appearance of bar code apparatus 22 is such that only a cover 42 and a part of a substrate 40 covered by cover 42 are visible, and at one sight, it is difficult to recognize the apparatus as a bar code.

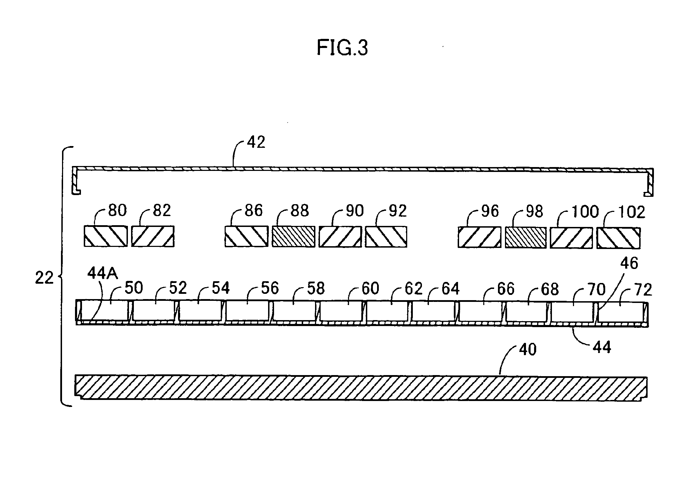

Fig. 3 is a cross-sectional view of bar code apparatus 22. The cross section is taken along a chain-dotted line 3-3 of Fig. 2. Referring to Fig. 3, bar code apparatus 22 includes a substrate 40 and a reflecting plate 44, at least a surface 44A of which has retroreflective ability (reflecting at least a part of incident light back in the incident direction). A plurality of partition plates 46 are mounted with a predetermined interval, on the surface of reflecting plate 44 approximately at a right angle to the surface 44.

A polarizing plate or a light shielding plate is inserted to a plurality of inserting portions 50-72 defined by the plurality of partition plates 46. There may be a portion or portions to which neither the polarizing plate nor the light shielding plate is inserted. In Fig. 3, polarizing plates 80, 86, 92 and 102 have axis of polarization along a horizontal direction when bar code apparatus 22 is mounted. Similarly, polarizing plates 82, 90, 96 and 100 have axis of polarization along a vertical direction. In addition, light shielding plates 88 and 98 are inserted to inserting portions 60 and 68, respectively. Nothing is inserted to inserting portions 54 and 64. At the portion where nothing is inserted, the surface 44A of reflecting plate 44 is exposed, and therefore, when light enters, most part of the light is reflected back, in the incident direction. On the contrary, light shielding plate 88 is formed of a material that hardly reflects light. Surface color of light shielding plate 88 is selected to have a hue similar to that of other polarizing plates.

Here, in inserting portions 50 and 72 at opposite ends, polarizing plates 80 and 102 both having horizontal polarization axes are inserted, respectively. The reason will be describe in detail later. Here, polarizing plates 80 and 102 making opposite ends of bar code apparatus 22 will be hereinafter referred to as "markers".

Over the substrate 40, reflecting plate 44 and polarizing plate and the like, a cover 42 is put on, which is transparent but having the same hue as that of the polarizing plates used.

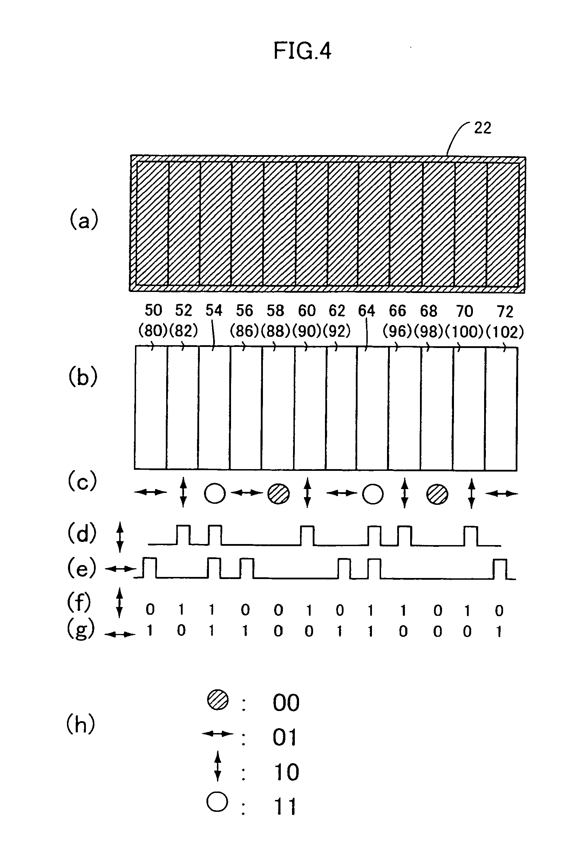

Fig. 4(a) is a front view of bar code apparatus 22, Fig. 4(b) shows an example of the inserting portions on the surface of reflecting plate 44 and corresponding polarizing plates or light shielding plates (or the surface of reflecting plate 44), Fig. 4(c) represents whether a polarizing plate or a light shielding plate is inserted to respective inserting portions, as well as the direction of polarization axis where a polarizing plate exists.

Referring to Fig. 4(c), a horizontal arrow indicates that a polarizing plate having a horizontal polarizing direction is provided at the corresponding position. A vertical arrow indicates that a polarizing plate having a vertical polarizing direction is provided at the corresponding position. A black circle (•) indicates that a light shielding plate is provided at the corresponding position. A white circle (o) indicates that neither a polarizing plate nor a light shielding plate is provided at the corresponding position.

The light reflected from the inserting portion provided with a polarizing plate having a horizontal polarization axis comes to have a horizontal plane of polarization. The light reflected from the inserting portion provided with a polarizing plate having a vertical polarization axis comes to have a vertical plane of polarization. The light reflected from an inserting portion without any insertion is not polarized, and includes light beams of various polarizing directions. Light is not reflected from an inserting portion provided with a light shielding plate. Therefore, by examining whether light is reflected or not, whether the reflected light is polarized or not, and which is the direction of polarization for each of the inserting portions of bar code apparatus 22, it becomes possible to retrieve information represented by the arrangement of polarizing plates and the like in the inserting portions of bar code apparatus 22. Portable information terminal 24 shown in Fig. 1 has such a function.

Portable information terminal 24 has a plurality of photo sensors for receiving light beams reflected from bar code apparatus 22, as will be described later, and in front of these photo sensors, polarizing plates are attached. When a light beam reflected from bar code apparatus 22 has been polarized and polarization axis of the polarizing plate provided on a photo sensor matches the direction of the plane of polarization of the reflected light beam, an output of the photo sensor increases, and when the polarization axis and the direction are orthogonal, the output of the photo sensor almost vanishes. In the middle, an output corresponding to the angle is provided. If the reflected light beam is free of polarization, that is, when the light is reflected from an inserting portion where neither the polarizing plate nor the light shielding plate is provided, a constant output is provided, regardless of the direction of polarization of the polarizing plate on the photo sensor. Light is not reflected from an inserting portion where a light shielding plate is inserted, and therefore, the photo sensor does not provide any output.

Figs. 4(d) and 4(e) schematically represent signal waveforms output from a photo sensor with a horizontal polarizing plate and a photo sensor with a vertical polarizing plate, respectively, in response to light beams reflected from bar code apparatus 22 having an arrangement of polarizing plates and light shielding plates such as shown in Fig. 4(c). Figs. 4(f) and (g) respectively represent binary codes obtained by thresholding these signal waveforms with a certain threshold. When these codes are joined in line, 2-digit codes corresponding to the arrangement of light shielding plates and the like shown in Fig. 4(b) can be obtained. The result is as shown in Fig. 4(h).

Referring to Fig. 4(h), code "00" is obtained from an inserting portion to which a light shielding plate is inserted, and a code "11" is obtained from an inserting portion to which neither the polarizing plate not the light shielding plate is inserted. It can be seen that a code "01" is obtained from an inserting portion in which a polarizing plate with a horizontal polarization axis is provided, and a code "10" is obtained from an inserting portion in which a polarizing plate with a vertical polarization axis is provided. Therefore, information of 2 bits can be obtained per one inserting portion which is set to either one of four settings (polarizing plate with horizontal polarization axis, polarizing plate with vertical polarization axis, light shielding plate and no polarization plate), such as shown in Fig. 4(b).

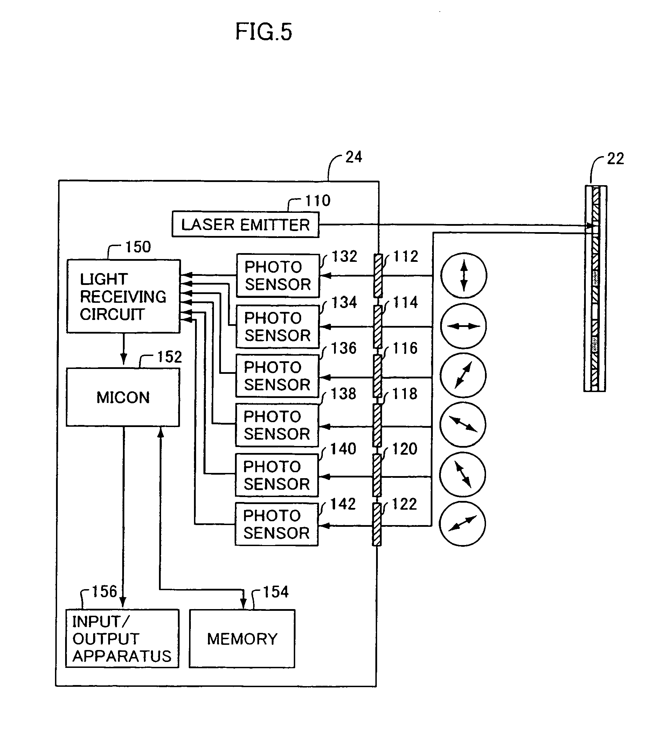

Fig. 5 is a block diagram of portable information terminal 24. Referring to Fig. 5, portable information terminal 24 includes: a laser emitter 110 emitting a laser beam with no specific polarization axis, such as a random polarization laser beam of a specific wavelength range; six photo sensors 132, 134, 136, 138, 140 and 142 receiving the light of the wavelength of the laser beam from laser emitter 110; polarizing plates 112, 114, 116, 118, 120 and 122 arranged in front of the photo sensors respectively, and having polarization axes of mutually different directions, as will be described later; a light receiving circuit 150 receiving outputs of photo sensors 132 to 142 and performing analog/digital conversion and quantization; a memory 154 storing information associated with specific codes beforehand; an input/output apparatus 156 including a liquid crystal display, an input button and the like; and a microcomputer (hereinafter referred to as micon) 152 decoding a code represented by bar code apparatus 22 based on an output from light receiving circuit 150, retrieving information corresponding to the code from memory 154 and outputting through input/outputting apparatus 156. Input/output apparatus 156 includes a button, not shown, for operating laser emitter 110. At the time of scanning, the user moves portable information terminal 24 in the horizontal direction while pressing the button, and scans bar code apparatus 22.

Polarizing plates 112 and 114 have vertical and horizontal polarization axes, respectively, when viewed from the front side. Polarizing plates 116 and 118 have polarization axes rotated by 30 degrees counterclockwise when viewed from the photo sensor side, from the polarization axes of polarization plates 112 and 114, respectively. Polarizing plates 120 and 122 have polarization axes rotated by 30 degrees clockwise when viewed from the photo sensor side, from the polarization axes of polarization plates 112 and 114, respectively

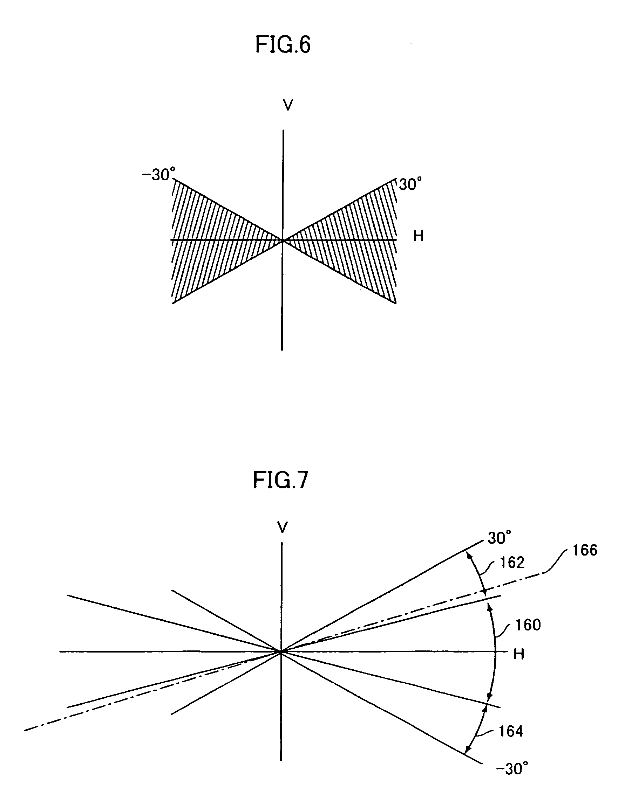

Generally, in a system such as shown in Fig. 1, bar code apparatus 22 is arranged widthwise. Therefore, the operator also scans approximately in the horizontal direction. As it is a human operation, the scanning may not be perfectly horizontal. Therefore, some consideration must be made to allow correct reading of bar code apparatus 22 even when the direction deviates to some extent from the horizontal direction case that scanning direction is not very much deviated from the horizontal direction. Therefore, here, appropriate reading is made possible as long as the scanning direction is within ± 30 degrees from the horizontal direction, as shown in Fig. 6. Such a process is realized by a program executed by micon 152 shown in Fig. 5.

In the present embodiment, Referring to Fig. 7, when the scanning direction is within a range 160 of ± 15 degrees from the horizontal direction, outputs from photo sensors 132 and 134 are used. When the scanning direction is in the range 162 of + 15 to + 30 degrees from the horizontal direction, outputs from photo sensors 136 and 138 are used. When the scanning direction is in the range 164 of - 15 to - 30 degrees, outputs from photo sensors 140 and 142 are used. In order to appropriately perform such a processing, provision of a "marker" formed by a polarizing plate having a horizontal polarization axis inserted to the inserting positions of opposing ends of bar code apparatus 22 is utilized. Details will be described later.

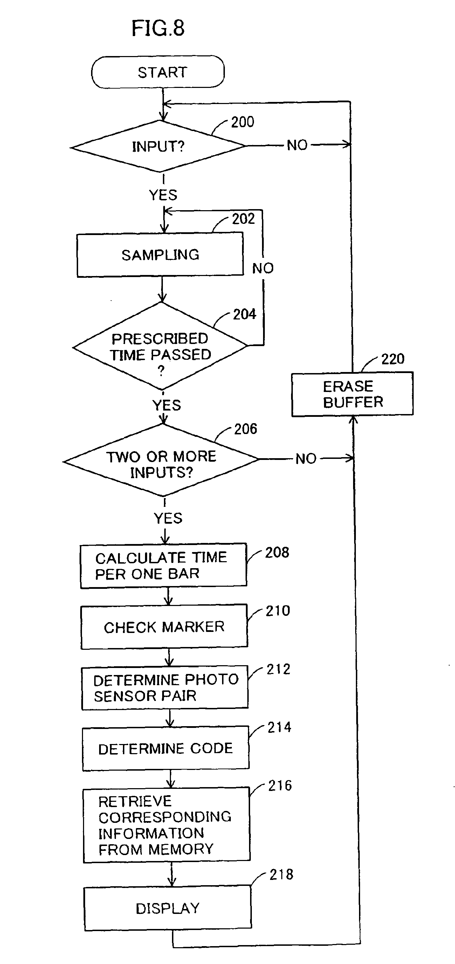

Fig. 8 is a flow chart representing a control structure of the program executed by micon 152 of the present embodiment. Referring to Fig. 8, micon 152 waits for an input from light receiving circuit 150 (200). When there is an input, micon starts sampling of outputs from light receiving circuit 150 (202), and for a prescribed time period, repeats sampling at a prescribed time interval. The sampling interval here is selected such that, assuming that bar code apparatus 22 is at a distance of about 10 meters, 20 or more samples could be obtained per one inserting portion when a user manually scans bar code apparatus 22.

After the prescribed time period, output samples from photo sensor 114 is analyzed to determine whether at least two pulses could be found, that are considered to be light beams reflected from one inserting portion (206). As described above, polarizing plates having horizontal polarization axis are provided at opposing ends of bar code apparatus 22, and therefore, when normal scanning takes place, it naturally follows that two or more reflected light beams are detected by photo sensor 134. When there are two or more pulses, the output from photo sensor 114 is determined to When there are two or more pulses, the output from photo sensor 114 is determined to include a valid signal sequence, and control proceeds to step 208 If two or more pulses cannot be detected, the output of photo sensor 114 is determined not to include a valid signal sequence, and therefore, buffer contents are erased (220) and control returns to step 200.

When two or more pulses are detected, time lapse from the head to the tail of the valid samples among the outputs of photo sensor 114 is calculated, to find the time per one inserting portion (one bar) (208). Assuming that the time lapse from the head to the tail of valid samples is 0.12 sec., the time per one bar would be 0.01 sec., as there are 12 inserting portions in bar code apparatus 22.

Next, of the outputs of photo sensors 134, 138 and 142, samples of the portions corresponding to the markers at opposing ends are checked (210). In the present embodiment, simply, an average value of sample values of the portions corresponding to the markers at opposing ends is calculated, from the photo sensor outputs.

In step S212, one of photo sensors 134, 138 and 142 that has the largest average value calculated in step S210, and a photo sensor provided with a polarization plate having a polarization axis orthogonal to the polarization axis of that photo sensor are determined to be a photo sensor pair used for determining the code later. When the marker output of photo sensor 134 is the largest, photo sensors 134 and 132 are selected as the pair. When the marker output of photo sensor 138 is the largest, photo sensors 138 and 136 are selected as the pair. When the marker output of photo sensor 142 is the largest, photo sensors 142 and 140 are selected as the pair.

In step 214, based on the output of the photo sensor pair determined in step S212, a process for determining the code represented by bar code apparatus 22 is performed, in the manner as described with reference to Fig. 4. At this time, the code corresponding to the marker portion is neglected.

In step 216, information corresponding to the code determined in this manner is retrieved from memory 154, and the information is displayed through input/output control returns to step 200.

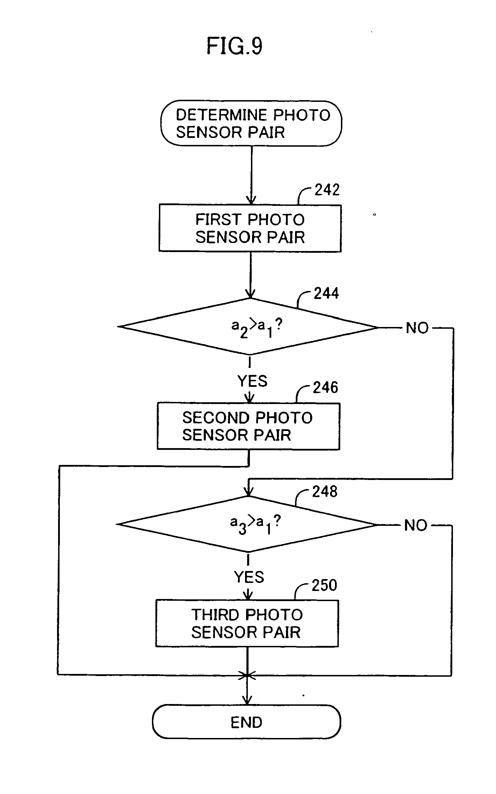

Fig. 9 shows details of the process executed in step 212 of Fig. 8. Referring to Fig. 8, first, as default values of photo sensor pair to take out the code, first pair of photo sensors 132 and 134 is selected (242). Thereafter, in step 210, whether the average value $a_2$ calculated for the marker outputs of a second pair of photo sensors 136 and 138 exceeds the average value $a_1$ calculated for the marker outputs of the first pair of photo sensors 132 and 134 or not is determined. If $a_2 > a_1$, the second pair of photo sensors 136 and 138 is selected in step S246, and the process ends.

If the relation $a_2 > a_1$ does not hold, whether the average value $a_3$ calculated for the marker outputs of a third pair of photo sensors 140 and 142 exceeds the average value $a_1$ calculated for the marker outputs of the first pair of photo sensors 132 and 134 or not is determined. If $a_3 > a_1$, the third pair of photo sensors 140 and 142 is selected and the process ends.

Thus, the process for determining the photo sensor pair ends. As described above, at every scanning, the photo sensor pair for code detection is determined based on the marker output. Thus, even when the scanning direction deviates to some extent from the horizontal direction, it is possible to correctly read the bar code.

Referring to Fig. 1, bar code apparatus 22 and portable information terminal 24 having such structures operate in the following manner. Laser emitter 110 generates and emits a laser beam. It is assumed that the laser beam is not polarized to a specific plane of polarization. Among the inserting portions of bar code apparatus 22, at a portion not provided with any polarization plate or light shielding plate, most of the light is reflected by the retroreflecting plate, and as a result, the reflected light beam enters the photo sensor through corresponding polarizing plate. At an inserting portion where a polarizing plate is provided, only the light having the plane of polarization matching the direction of polarization axis of the polarizing plate is reflected and enters the corresponding polarizing plate, so that light having an amount corresponding to the combination of the direction of polarization of the incident light and the direction of combination of the direction of polarization of the incident light and the direction of polarization axis of the polarizing plate enter the photo sensor. Specifically, most of the light is transmitted through a polarizing plate of which direction of polarization axis relatively matches the direction of polarization of the incident light, while the light is intercepted by a polarizing plate of which direction of polarization axis relatively crosses the direction of polarization orthogonally. When the relative directions between the two is in the middle, the amount of light entering the photo sensor varies in accordance with the angle. At an inserting portion provided with a light shielding plate, light is not reflected, and therefore, no light enters the photo sensor.

As the user scans the bar code by moving portable information terminal 24 substantially horizontally, light beams (if any) reflected from respective inserting portions enter respective photo sensors in turn. In the present embodiment, the description is based on an assumption that scanning is in clockwise direction. If scanning were done in the opposite direction, digits of the resulting code would be reversed. Therefore, in the present embodiment, the user must be well informed of the necessity to scan clockwise. Alternatively, the code may be made symmetrical, so that the code can appropriately be read no matter in which direction the code is scanned.

Each photo sensor applies an analog output signal corresponding to the amount of incident light to light receiving circuit 150. Light receiving circuit 150 successively digitizes the analog signals and applies the resulting values to micon 152.

Referring to Fig. 8, when activated, micon 152 monitors whether there is an output from light receiving circuit 150 or not (200). When there is an input from light receiving circuit 150, micon 152 samples the values for each photo sensor. After a prescribed time period, sampling ends (204), and whether two or more pulses considered as inputs from the inserting portions exist in the outputs of photo sensor 114 or not is determined If it is determined that there is not, the buffer is erased (220) and again, the micon waits for an input (200).

The following description is on the assumption that there are two or more inputs. In step 208, the time per one bar is calculated. Assume that the time interval between the head and tail of the valid input from photo sensor 134 is 0.12 sec. In step 208, this time is divided by the number (12) of bars on bar code apparatus 22. Therefore, the time per bar is calculated to be 0.01 sec. In step S210, among the outputs of photo sensors 134, 138 and 142, average value of the signal values at the first and last 0.01 seconds (signals corresponding to the marker) is calculated, photo sensor by photo sensor. In this example, it is assumed that the scanning is performed at such an angle as represented by the chain-dotted line 166 of Fig. 7. The chain-dotted line 166 belongs to the range 162. In this case, the average value of the outputs from photo sensor 138 becomes the largest. In step 212, therefore, the pair of photo sensors 138 and 136 is selected as a reference to determine the code.

In step 214, based on the outputs of photo sensors 136 and 138, the read code is determined in accordance with the code table shown in Fig. 4.

In step 216, using the series of codes as a key, data in memory 154 is accessed, and the corresponding information is retrieved. In next step 218, the information is displayed, and then the flow again returns to step 200 to wait for the next scanning.

As described above, in the present embodiment, the portion constituting the bars of bar code apparatus 22 is formed by inserting portion or portions provided with polarizing plate of different polarization directions, inserting portion or portions provided with light shielding plates, and inserting portion or portions provided with neither of these. As for the color of light shielding plate, one having the same hue as the color of polarizing plate is used. Therefore, different from a typical bar code printed in white and black, it will not be recognized at one sight as a bar code Further, a light transmitting cover of the same hue as the polarizing plate is provided on the entire upper surface of reflecting plate 44, and therefore, an inserting portion provided with nothing cannot readily be distinguished from a portion provided with a polarizing plate or a light shielding plate, when viewed. As a result, the apparatus is not so tasteless as a conventional bar code, and hence, it does not spoil the atmosphere even when placed, for example, on the side of a work of art at a museum.

Further, bar code apparatus 22 of the present embodiment has an inserting portion not provided with any plate. Therefore, a cover becomes necessary to realize color matching with other portions. When the tone of the reflecting plate itself is in similar hue to that of the polarizing plate and the light shielding plate, however, the cover is unnecessary. Further, when the inserting portion not provided with any plate is not used, the cover is unnecessary. In that case, however, number of bits that can be expressed by one bar becomes smaller.

In bar code apparatus 22 of the present embodiment, polarizing plates having the polarization axes of the same direction are provided at inserting portions at opposing ends. Therefore, every time a code is to be decoded, scanning direction is estimated using outputs of photo sensors 134, 138 and 142 for the inserting portions at the opposing ends, and an appropriate pair of photo sensors can be used. In other words, appropriate calibration is possible for every scanning, and even when the scanning direction fluctuates to some extent, bar codes can be read correctly.

In bar code apparatus 22 of the present embodiment, polarizing plates having the polarization axes of the same direction are provided at inserting portions at opposing ends. Where it is guaranteed that the scanning direction is always the same, similar calibration as in the present embodiment becomes possible by providing a polarizing plate having a polarization axis of a prescribed direction only at one of the opposing ends, for example, only at the bar portion at the head.

[Second Embodiment]

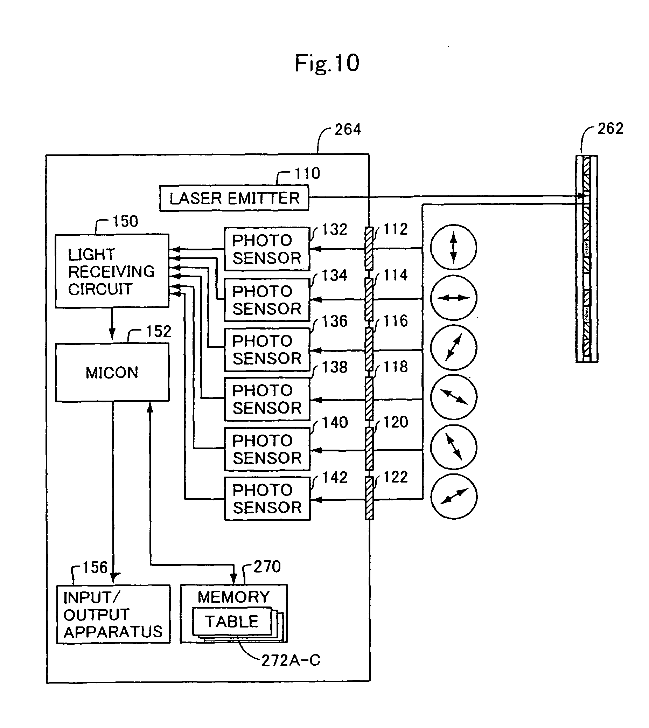

Fig. 10 is a block diagram of portable information terminal 264 used in the system in accordance with the second embodiment of the present invention, together with a bar code apparatus 262 used in the system Portable information terminal 264 and bar code apparatus 262 may be used in place of portable information terminal 24 and bar code apparatus 22, respectively, of the first embodiment.

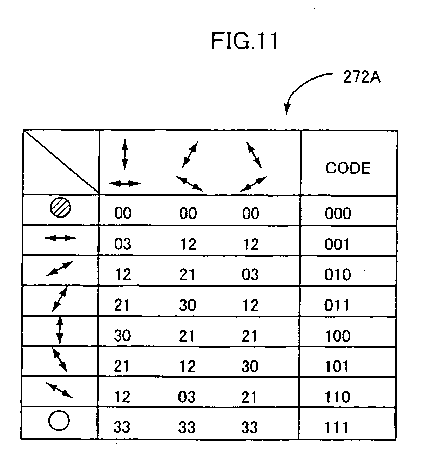

The structure of bar code apparatus 22 in accordance with the second polarizing plates used have polarization axes of wider variety. Specifically, as shown in the leftmost column of the table shown in Fig. 11, polarizing plates used in bar code apparatus 262 of the present embodiment have axes of polarization in the horizontal direction, and in directions rotated counterclockwise by 30, 60, 90, 120 and 150 degrees, successively therefrom. In combination with the use of light shielding plate or no plate, one inserting portion can express one of 8 values, and therefore, one bar can express 3 bits.

Again referring to Fig. 10, portable information terminal 264 is different from portable information terminal 24 of the first embodiment in a portion for determining which of the photo sensor pairs is to be used and a portion for decoding the code, of the program executed by micon 152. Further, in place of memory 154 of the first embodiment, code tables 272A-C used by the program executed by micon 152 and a memory 270 storing information corresponding to the codes are used, as will be described later. Except for these points, portions corresponding to those shown in Fig. 2 are denoted by the same reference characters, and these portions have the same functions. Therefore, detailed description thereof will not be repeated here.

Fig. 11 shows an example of a code table 272A used in the present embodiment. In the present embodiment, when a code is to be determined, outputs of all photo sensors are used. The outputs of the photo sensors, however, differ depending on the scanning direction. Therefore, in the present embodiment, different coding methods are used for different scanning directions. For this purpose, in the present embodiment, codes corresponding to combinations of photo sensor outputs are prepared in the form of tables, and a plurality of tables are prepared for different scanning directions. An appropriate table is selected and used in accordance with the actual scanning direction.

Fig. I shows inclinations of polarization axes of the polarizing plates on respective bars of bar code apparatus 262 on the ordinate, inclinations of polarization axes of the polarizing plates provided in front of respective photo sensors on the abscissa, and photo sensor outputs corresponding to respective combinations in the form of a table, assuming that the scanning is almost horizontal. On the ordinate, a black circle (•) indicates that a light shielding plate is used, and a white circle (o) indicates that neither a polarizing plate nor a light shielding plate is used, respectively. On the right most end of code table 272A, codes corresponding to the combinations of outputs on the left are indicated. In the present embodiment, the values in the table of Fig. 11 assume any of 0 to 3. Namely, the photo sensor outputs are quantized such that the maximum value corresponds to 3, no output corresponds to zero and outputs in the middle are divided into two and represented by 1 and 2, respectively. Quantization will be described later.

As described above, the table is used when scanning is performed almost horizontally. Code tables 272B and 272C, which are used when scanning direction is inclined, can be prepared by shifting each row of the values in central column of code table 272A, except for the rows corresponding to • and o, to the preceding or succeeding direction one by one in a circulating manner.

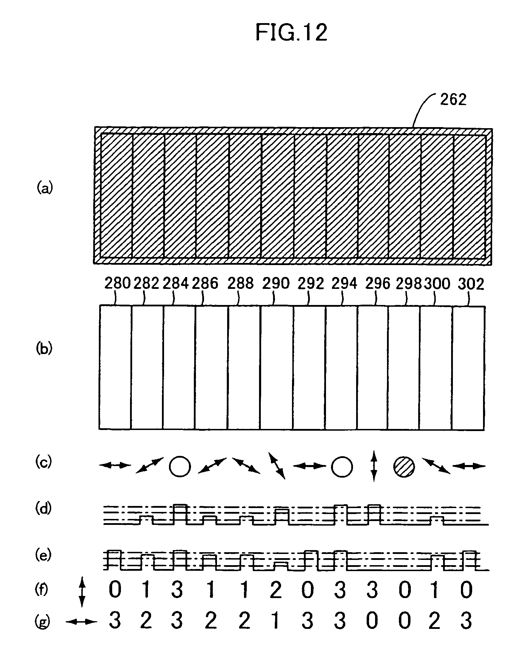

Fig. 12(a) shows bar code apparatus 262 used in the present embodiment, viewed from the front side. Similar to the first embodiment, in bar code apparatus 262, the shielding plate and the polarizing plate are of similar colors, and a transparent cover having a similar hue to the polarizing plate is provided on the entire body. Therefore, the appearance is different from a conventional bar code. Bar code 262 does not seem at one sight as tasteless as a conventional one. Therefore, it does not spoil the atmosphere even when placed, for example, on the side of a work of art at a museum.

Fig. 12(b) shows an arrangement of corresponding inserting portions 280 to 302. Fig. 12(c) shows examples of the directions of polarization axes of polarizing plates in respective inserting portions. As in Fig. 4, a black circle (•) indicates that a light shielding plate is used, and a white circle (o) indicates that neither a polarizing plate nor a light shielding plate is used.

Fig. 12(d) schematically shows signal output waveforms, when scanning is done exactly in the horizontal direction and light beams having polarization planes shown in Fig. 12(c) enter polarizing plates having vertical axis of polarization, obtained from photo sensors corresponding to respective polarizing plates. Similarly, Fig. 12(e) schematically shows signal output waveforms, when light beams having polarization planes shown in Fig. 12(c) enter polarizing plates having horizontal axis of polarization, obtained from photo sensors corresponding to respective polarizing plates.

Cases where the direction of polarizing plane of the incident light is the same as the direction of axis of polarization of the polarizing plate in front of the photo sensor and where the directions are orthogonal to each other have been described above. Figs. 12(d) and (e) represent method for quantization including other cases. Generally, when lines along the two directions form an angle of 30 degrees, the intensity of light entering the photo sensor will be about $(\sqrt{3})/2 \approx 0.866$ times the maximum value, and when the angle is 60 degrees, the intensity is about 0.5 times the maximum value. Therefore, in the present embodiment, the maximum value M of the input is used as a reference, and values 0.3 times, 0.7 times and 0.9 times the maximum value are used as thresholds. When an input value X satisfies $X < 0.3M$, the value is regarded as 0; when $0.3M \le X \le 0.7M$, the value is regarded as 1; when $0.7M \le X < 0.9M$, the value is regarded as 2; and when $0.9M \le X$, the value is regarded as 3. In Fig. 12, (f) and (g) represent numbers obtained in this manner from the waveforms of (d) and (e). It is naturally understood that different thresholds may be used.

In bar code apparatus 262 of the present embodiment, the direction of polarization axis of polarizing plates at opposing ends is horizontal, as in the case of the first embodiment. In the present embodiment, a polarizing plate having the direction of polarization axis rotated counterclockwise by 30 degrees from the horizontal direction is always arranged at the second from left position when viewed from the front side. Further, a polarizing plate having the direction of polarization axis rotated clockwise by 30 degrees from the horizontal direction is always arranged at the second from right position when viewed from the front side. In determining the scanning direction to select the table to be used for code determination, outputs from these polarizing plates select the table to be used for code determination, outputs from these polarizing plates are used as markers.

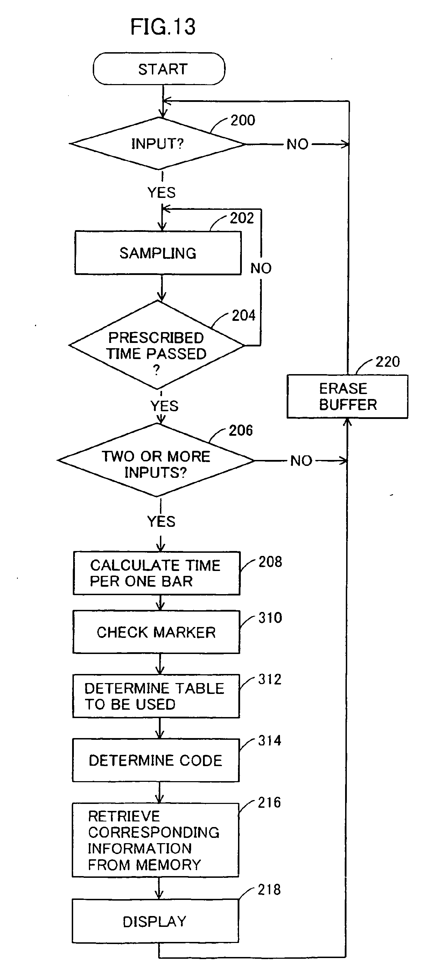

Fig. 13 is a flow chart representing a control flow of the program executed by micon 152 in the system of the second embodiment. Referring to Fig. 13, steps in which similar processes as in the example of Fig. 8 are performed are denoted by the same reference characters, and detailed description thereof will not be repeated. The overall flow is also similar to that of Fig. 8, and therefore, only the different steps will be described in detail here.

The program having such a control flow as shown in Fig. 13 differs from that of Fig. 8 in that in place of steps 210, 212 and 214 of Fig. 8, the flow includes the step 310 of checking markers, the step 312 of determining a table to be used for code determination from code tables 272A to 272C in accordance with the result of marker check, and the step 314 of determining the code using the table selected in step 312.

In step S310, different from the first embodiment, of the outputs of photo sensor 134, the combination of outputs (markers) from portions corresponding to two bars at the head and two bars at the tail, respectively, of bar code apparatus 262 are checked. When scanning is substantially horizontal, the combination of these four markers (four values successively from the left most one when viewed from the front side) will be "3223". When scanning is inclined counterclockwise by 30 degrees, the combination will be "2312". When scanning is inclined clockwise by 30 degrees, the combination will be "2132". Therefore, depending on the combination, the scanning direction can be determined.

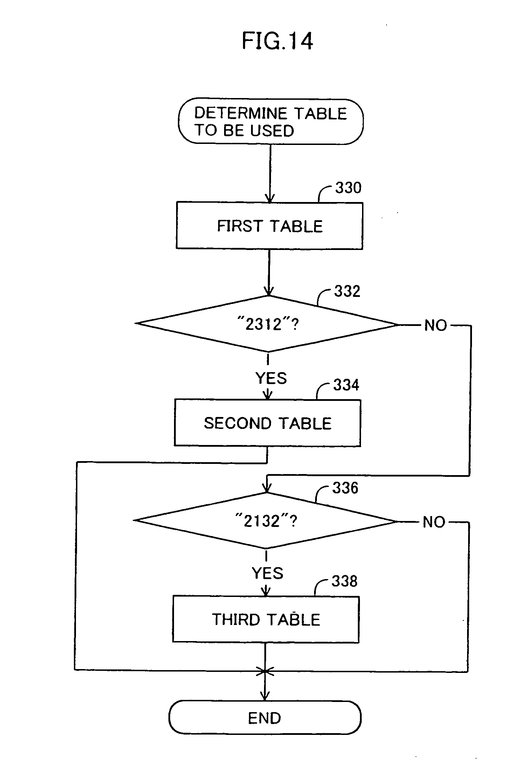

Referring to Fig. 14, the process performed in step 312 of Fig 13 will be described. First, in step 330, the first code table 272A is set as a default table Thereafter, in step 332, whether the combination of four markers described above is "2312" or not is determined. If the combination is "2312", in step 334, it is determined that the second code table 272B prepared beforehand for the scanning direction inclined counterclockwise by 30 degrees is to be used, and the process ends. If the combination is not "2312", whether the combination is "2132" or not is determined in step 336. If the combination is "2132", in step 338, it is determined that the third code table 272C prepared beforehand for the scanning direction inclined clockwise by 30 degrees is to be used, and the process ends.

The structure of the second embodiment of the present invention is as described above.

In the following, the operation of the system in accordance with the second embodiment will be described. The overall operation is the same as that of the first embodiment, and therefore, only the operation from step 310 to step 314 of Fig. 13 will be described.

In step 310, the combination of values corresponding to the markers among the outputs of photo sensor 134 is checked. Here, it is assumed that the combination is "2132".

In step 312 of Fig. 13, determination is as follows. In step 330 of Fig. 14, the first table is set as a default table. The result of determination of step 332 is "NO", and therefore, the control proceeds to step 336. In step 336, the result of determination is "YES". Therefore, in step 338, it is determined that the third table 272C is to be used.

In step 314 of Fig. 13, code is determined using the third code table 272C. The third table 272C is obtained by shifting one stage forward, in a circulating manner, the rows in the central column of the first table 272A except for the rows corresponding to • and o. Now, assume that the outputs of photo sensors 132 to 134 are quantized to "213012". This corresponds to a code "010", and thus, the code is determined.

Operation after step 216 is the same as that of the first embodiment. Therefore, detailed description will not be repeated here.

As described above, in the present embodiment, prescribed polarization directions are ensured at two bars each on the left and right ends of bar code apparatus 262, to enable detection of inclination in scanning direction at the time of scanning, and a table is selected in accordance with the detected inclination to enable correct coding. Specifically, in the present embodiment also, the inclination of scanning can be corrected at every scanning as in the first embodiment, and thus, correct information can be obtained.

Further, in bar code apparatus 262 of the present embodiment also, the colors of the shielding plates and the cover are so selected that the apparatus is not readily be recognized as a bar code apparatus. Thus, it does not spoil the atmosphere even when placed, for example, on the side of a work of art at a museum.

[Third Embodiment]

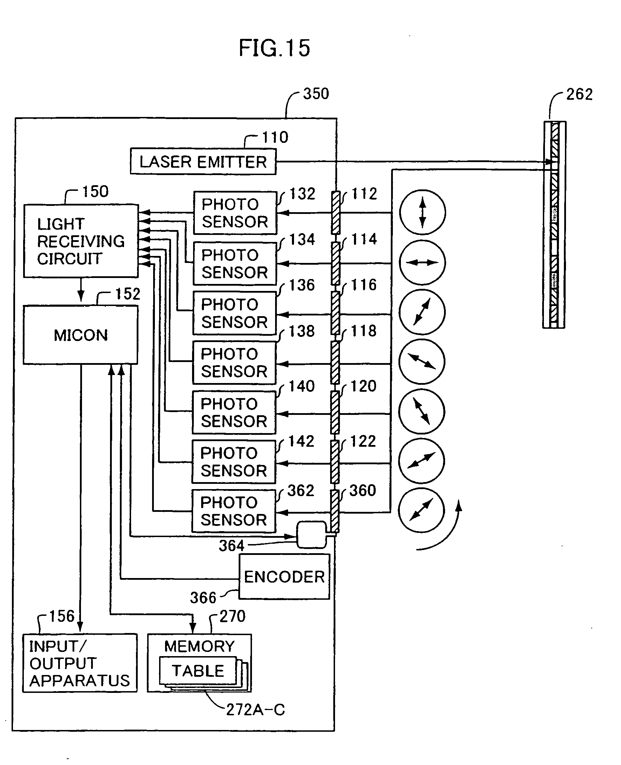

Fig. 15 is a block diagram of a portable information terminal 350 used in the system in accordance with the third embodiment of the present invention. Portable information terminal 350 may be used in place of portable information terminal 264 of the second embodiment.

The structure of bar code apparatus 350 in accordance with the third embodiment is approximately the same as that of the second embodiment, and the difference resides in that the apparatus additionally includes a photo sensor 362, a polarizing plate 360 arranged to cover a light receiving surface of photo sensor 362 and rotatable about an axis vertical to the light receiving surface of photo sensor 362, a motor 364 controlled by micon 152 for rotating polarizing plate 360, and an encoder 366 detecting the angle of rotation of polarizing plate 360 from the rotation of the rotating shaft of motor 364 and applying the detected result to micon 152.

In the present embodiment, the angle of rotation of polarizing plate 360 is detected when the output of photo sensor 362 becomes the largest, so that the angle between the scanning direction and the direction of arrangement of inserting portions of bar code apparatus 262 can directly be detected. As an appropriate code table is selected in accordance with the detected angle, similar operation as the portable information terminal 264 of the second embodiment can be attained. Except for this point, the terminal of the third embodiment is the same as that of the second embodiment. Therefore, detailed description thereof will not be repeated.

In the bar code apparatuses of the above described embodiments, a cover is provided on the entire body, so that portions provided with neither the polarizing plate nor the light shielding plate is not very visible. The present invention, however, is not limited thereto. By way of example, when transparent synthetic resin, glass or the like of a color similar to that of the polarizing plate is used, light without any polarization can be reflected, different from the polarizing plate. Therefore, in that case, use of the cover is unnecessary. It is also the same when a film of a similar color is adhered on the surface of transparent synthetic resin, glass or the like.

In the embodiments above, the direction of polarization axis of the polarizing plate is changed by 30 degrees from the horizontal direction. The present invention, however, is not limited to such embodiments. By way of example, the inclination angle may be 45 degrees. When a plurality of angles are used, the axis of polarization of the polarizing plate may be changed not at a constant angular interval but at various different angular intervals. In the embodiment above, the angle of change in the direction of polarization axis of the polarizing plate on the bar code apparatus matches the direction of polarization axis of the polarizing plate arranged in front of the photo sensor of the portable information terminal. This is because such arrangement simplifies preparation of tables and calculation of threshold values. It is unnecessary to make these directions match, if computational load is tolerable.

Though a number of photo sensors are used in the portable information terminal, the present invention is not limited to such embodiments. By way of example, similar embodiments can be realized using only one or two photo sensors. In that case, the polarizing plate positioned in front of the photo sensor or sensors is rotated, the angle of rotation is detected by an encoder or the like, and the sampling timing is adjusted to match a specific angle, so that similar effect as attained by the embodiments above using six photo sensors can be attained.

Though six photo sensors are used in the embodiments above, the number of photo sensors is not limited to six. Further, though outputs of a photo sensor pair corresponding to polarizing plates having orthogonally crossing polarization axes are used for detecting inclination and for determining codes, the present invention is not limited to such embodiments. By way of example, an embodiment may be possible in which three sets of photo sensors with corresponding polarizing plates having mutually different directions of polarization angle are used, and the number of photo sensors generally used is not specifically limited, but for one.

Though bar code apparatuses have been described in all the embodiments above, the present invention is not limited to a so called bar code apparatus. The present invention is applicable to any arrangement that allows optical reading of coded information, by placing figures representing coded information at predetermined positions. By way of example, polarizing plates may be arranged two-dimensionally, and the polarizing plates may be scanned by a plane-beam, so that two-dimensional coded information can be read. The portion corresponding to each bar need not be of a rectangular shape.

When information is displayed two-dimensionally, planer shape can be read by one scanning, and therefore, graphic processing is possible based on the read data. As a result, it becomes unnecessary that the portions corresponding to respective bars are arranged on a line. For instance, these portions may be arranged in a circle.

In the embodiments above, a retroreflective plate has been described as an example of the reflecting plate of the bar code apparatus. The present invention, however, is not limited thereto. Any light reflecting member may be used. By way of example, paper or cloth may be used. Further, the reflecting plate is not limited to a sheet-type member, and any member having a surface that can reflect light at a certain efficiency may be used.

The bar code apparatus of the present invention may be implemented on a sheet of paper using printing technique. This means that a bar code or similar information display apparatus can be provided on a surface of securities, including exchange coupons, bank notes, postage stamps, revenue stamps and capital stock certificates.

The present information display apparatus enables recording of a code, even the position of which cannot be visually recognized but can be read by a specific information reading apparatus, on securities and the like. This effectively prevents counterfeit of securities.

Industrial Applicability

The present invention relates to an information display apparatus and an information reading apparatus that can surely transmit optical information while not recognized by a viewer to be an optical information apparatus. Thus, the present invention can be applied to a system for transmitting information to general users of a museum or art gallery without spoiling artistic atmosphere, a system for transmitting information in secret, or a system to guarantee genuine goods and the like.

**Claims**

1. An information display device (22, 262) comprising:

   a plurality of polarizing plates (80, 82, 86, 90, 92, 96, 100, 102) arranged on at least a part of a plurality of areas (50-72, 280-302) defined with a predetermined interval and width on a main surface (44A), each of the plates having an axis of polarization equal to any of a plurality of different directions; **characterized by** a retro-reflecting plate (44) having the main surface (44A); wherein
   a code is optically transmitted by light beams reflected from areas (50, 52, 56, 60, 62, 66, 70, 72) of said main surface (44A) on which said plurality of polarizing plates (80, 82, 86, 90, 92, 96, 100, 102) are arranged and areas (54, 64) of said main surface on which said polarization plates (80, 82, 86, 90, 92, 96, 100, 102) are not arranged.

2. The information display device (22, 102) according to claim 1, further comprising
   a transparent cover member (42) having a color of similar hue to said polarizing plates (80, 82, 86, 90, 92, 96, 100, 102), provided to cover said main surface (44A) and said plurality of polarizing plates (80, 82, 86, 90, 92, 96, 100, 102).

3. The information display device (22, 102) according to claim 1, further comprising
   a light shielding plate (88, 98) arranged on at least a part of said plurality of areas (50-72, 280-302).

4. The information display device (22, 102) according to claim 3, wherein a surface of said light shielding plate (88, 98) has a color of similar hue to said polarizing plates (80, 82, 86, 90, 92, 96, 100, 102).

5. The information display device (22, 102) according to claim 1, further comprising
   a plurality of partition members (46) provided on said main surface (44A) of said reflecting plate (44) at a predetermined interval to define said plurality of areas (50-72, 280-302).

6. The information display device according to claim 5, wherein
each of said plurality of polarizing plates (80, 82, 86, 90, 92, 96, 100, 102) is detachably mounted on said plurality of areas (50-72, 280-302) partitioned by said plurality of partition members (46).

7. An information display device (22, 262) comprising:

a plurality of polarizing plates (80, 82, 86, 90, 92, 96, 100, 102) arranged on at least a part of a plurality of areas (50-72, 280-302) defined with a predetermined interval and width on a main surface (44A), each of the plates having an axis of polarization equal to any of a plurality of different directions; **characterized by** a retro-reflecting plate (44) having the main surface (44A), and
a light shielding plate (88, 98) having a color of similar hue to said polarizing plates (80, 82, 86, 90, 92, 96, 100, 102), provided in any of said plurality of areas (50-72, 280-302) where said polarizing plates (80, 82, 86, 90, 92, 96, 100, 102) are not provided; wherein
a code is optically transmitted by light beams reflected from areas (50, 52, 56, 60, 62, 66, 70, 72) of said main surface (44A) on which said plurality of polarizing plates (80, 83, 86, 90, 92, 96, 100, 102) are provided.

8. The information display device (22, 262) according to claim 7, further comprising
a plurality of partition members (46) provided on said main surface (44A) of said reflecting plate (44) at a predetermined interval to define said plurality of areas (50-72, 280-302).

9. The information display device (22, 262) according to claim 8, wherein
each of said plurality of polarizing plates (80, 82, 86, 90, 92, 96, 100, 102) and said light shielding plate (88, 98) is detachably mounted on said plurality of areas (50-72, 280-302) partitioned by said plurality of partition members (46).

10. The information display device (22, 262) according to claim 1, further comprising
a transparent cover member (42) having a color of similar hue to said polarizing plates (80, 82, 86, 90, 92, 96, 100, 102), provided to cover said plurality of polarizing plates (80, 82, 86, 90, 92, 96, 100, 102) and said light shielding plate (88, 90).

11. An optical information reading device (24, 264) for adapted to receive light reflected by a retro-reflective plate having a main surface and a plurality of polarizing plates arranged on at least a part of a plurality of areas of said main surface, said optical information reading device, comprising:

a plurality of photo sensors (132-142) for generating a light receiving signal of which amplitude varies in accordance with an amount of incident light of a specific wavelength range;
a plurality of polarizing plates (112-122) having mutually different predetermined directions of polarization axis, arranged to cover a light receiving surface of said plurality of photo sensors (132-142);
means (200-206) for receiving a light receiving signal from a predetermined first photo sensor (134) among said plurality of photo sensors (132-142) and for detecting existence of a series of valid signal sequence in the light receiving signal from said first photo sensor (134), said first photo sensor (134) being provided with a first polarizing plate (114) having polarization axis of a predetermined direction among said plurality of polarizing plates (112-122);
first determining means (208-212, 310, 312) responsive to said series of valid signal sequence for determining a method of decoding a signal sequence included in outputs from said plurality of photo sensors (132-134); and
means (214, 216, 314) for decoding the signal sequence included in the outputs from said plurality of photo sensors (132-134) by said determined method of decoding.

12. The optical information reading device (24) according to claim 11, wherein
said first determining means (208-212) includes second determining means (212, 242-250) for determining a method of decoding a signal sequence included in outputs from said plurality of photo sensors (132-134) based on an amplitude of a signal at a predetermined position among said series of valid signal sequence.

13. The optical information reading device (24) according to claim 12, wherein
said plurality of photo sensors (132-142) includes a plurality of photo sensor pairs (132-134, 136-138, 140-142);
polarizing plates (112-114, 116-118, 120-122) provided corresponding to two photo sensors included in each of said plurality of photo sensor pairs (132-134, 136-138, 140-142) have directions of polarization axes selected to cross each other at a predetermined angle;
said second determining means (212, 242-250) includes means (244, 248) for selecting any one of said plurality of photo sensor pairs based on an amplitude of a signal at a predetermined position among said series of valid signal sequence; and
said decoding means (214, 216) includes means (214) for decoding one signal sequence from two outputs of both photo sensors included in the photo sensor pair (132-134, 136-138, 140-142) selected by said selecting means (244, 248).

14. The optical information reading device (24) according to claim 13, wherein
said predetermined angle is a right angle.

15. The optical information reading device (24) according to claim 13, wherein
said decoding means (214) includes means (214) for determining a code based on a combination of amplitudes of two outputs of both photo sensors included in the photo sensor pair (132-134, 136-138, 140-142) selected by said selecting means (244, 248).

16. The optical information reading device (24) according to claim 13, wherein
said selecting means (244, 248) includes means (244, 248) for selecting any one of said plurality of photo sensor pairs based on amplitudes of signals at a plurality of positions including predetermined first and second positions, of said series of valid signal sequence.

17. The optical information reading device (24) according to claim 16, wherein
said first position is the head of said series of valid signal sequence.

18. The optical information reading device (24) according to claim 16, wherein
said second position is the tail of said series of valid signal sequence.

19. The optical information reading device (264) according to claim 11, further comprising
means (270) for storing a plurality of code tables (272A-C) respectively storing combinations of output amplitude combinations from said plurality of photo sensors (132-142) and corresponding codes; wherein
said first determining means (208-312) includes means (310, 312) for determining one of said plurality of code tables (272A-C) based on an amplitude of a signal at a predetermined position of said series of valid signal sequence; and
said decoding means (214-218, 314) includes means (216) for converting a combination of amplitudes of signals output from said plurality of photo sensors (132-142) simultaneously with said series of valid signal sequence to a code, using the code table (272A-C) selected by said selecting means (310, 312).

20. The optical information reading device (24) according to claim 18, wherein
said predetermined angle is a right angle.

21. The optical information reading device (264) according to claim 18, wherein
said selecting means (310, 312) includes means (330-338) for selecting any one of said plurality of photo sensor pairs (132-134, 136-133, 140-142) based on amplitudes of signals at a plurality of positions including predetermined first and second positions, of said series of valid signal sequence.

22. The optical information reading device (264) according to claim 21, wherein
said first position is the head of said series of valid signal sequence.

23. The optical information reading device (264) according to claim 21, wherein
said second position is the tail of said series of valid signal sequence.

24. The optical information reading device (24) according to claim 11, wherein
said first determining means (208-212) includes second determining means (212) responsive to said series of valid signal sequence, for determining relative positional relation between plane of polarization of light incident on said first polarizing plate (114) and direction of polarization axis of said first polarizing plate (114) and for determining a method of decoding a signal sequence included in outputs from said plurality of photo sensors.

25. The optical information reading device (350) according to claim 24, further comprising:

    means (364) for changing direction of the polarization axis of said first polarizing plate (360); and
    means (366) for detecting direction of polarization axis of said first polarizing plate (360); wherein

said second determining means includes determining means responsive to said series of valid signal sequence and to an output of said detecting means (366), for determining relative positional relation between plane of polarization of light incident on said first polarizing plate (360) and direction of polarization axis of said first polarizing plate (360) and for determining a method of decoding a signal sequence included in outputs from said plurality of photo sensors (133-134, 362).

**Patentansprüche**

1. Informationsanzeigevorrichtung (22, 262) mit:

   einer Mehrzahl von polarisierenden Platten (80, 82, 86, 90, 92, 96, 100, 102), welche auf zumindest einem Teil einer Mehrzahl von Bereichen (50-72, 280-302) angeordnet sind, die mit einem vorbestimmten Zwischenraum und einer vorbestimmten Breite auf einer Hauptoberfläche (44A) definiert sind, wobei jede der Platten eine Polarisationsachse aufweist, die gleich zu irgendeiner einer Mehrzahl von unterschiedlichen Richtungen ist, **gekennzeichnet durch** eine retroreflektierende Platte (44), die die Hauptoberfläche (44A) aufweist, wobei ein Code optisch **durch** Lichtstrahlen übertragen wird, die von Bereichen (50, 52, 56, 60, 62, 66, 70, 72) der Hauptoberfläche (44A) reflektiert werden, auf denen die Mehrzahl von polarisierenden Platten (80, 82, 86, 90, 92, 96, 100, 102) angeordnet ist, und Bereichen (54, 64) der Hauptoberfläche, auf denen die Polarisationsplatten (80, 82, 86, 90, 92, 96, 100, 102) nicht angeordnet sind.

2. Informationsanzeigevorrichtung (22, 102) nach Anspruch 1, die weiterhin aufweist:

   ein transparentes Abdeckungsteil (42) mit einer Farbe eines ähnlichen Farbtons wie die polarisierenden Platten (80, 82, 86, 90, 92, 96, 100, 102), das so vorgesehen ist, daß es die Hauptoberfläche (44A) und die Mehrzahl an polarisierenden Platten (80, 82, 86, 90, 92, 96, 100, 102) bedeckt.

3. Informationsanzeigevorrichtung (22, 102) nach Anspruch 1, die weiterhin aufweist:

   eine lichtabschirmende Platte (88, 98), die auf zumindest einem Teil der Mehrzahl von Bereichen (50-72, 280-302) angeordnet ist.

4. Informationsanzeigevorrichtung (22, 102) nach Anspruch 3, bei der eine Oberfläche der lichtabschirmenden Platte (88, 98) eine Farbe eines ähnlichen Farbtons wie die polarisierenden Platten (80, 82, 86, 90, 92, 96, 100, 102) aufweist.

5. Informationsanzeigevorrichtung (22, 102) nach Anspruch 1, die weiterhin aufweist:

   eine Mehrzahl von Unterteilungsteilen (46), die auf der Hauptoberfläche (44A) der reflektierenden Platte (44) mit einem vorbestimmten Zwischenraum vorgesehen sind zum Definieren der Mehrzahl von Bereichen (50-72, 280-302).

6. Informationsanzeigevorrichtung nach Anspruch 5, bei der jede der Mehrzahl von polarisierenden Platten (80, 82, 86, 90, 92, 96, 100, 102) abnehmbar auf der Mehrzahl von Bereichen (50-72, 280-302) angebracht ist, welche durch die Mehrzahl von Unterteilungsteilen (46) abgeteilt werden.

7. Informationsanzeigevorrichtung (22, 262) mit:

   einer Mehrzahl von polarisierenden Platten (80, 82, 86, 90, 92, 96, 100, 102), die auf zumindest einem Teil einer Mehrzahl von Bereichen (50-72, 280-302), welche mit einem vorbestimmten Zwischenraum und einer vorbestimmten Breite auf einer Hauptoberfläche (44A) definiert sind, angeordnet ist, wobei jede der Platten eine Polarisationsachse aufweist, die gleich irgendeiner einer Mehrzahl von unterschiedlichen Richtungen ist, **gekennzeichnet durch** eine retroreflektierende Platte (44), die die Hauptoberfläche (44A) aufweist und eine lichtabschirmende Platte (88, 98) mit einer Farbe eines ähnlichen Farbtons wie die polarisierenden Platten (80, 82, 86, 90, 92, 96, 100, 102), die in irgendeinem der Mehrzahl von Bereichen (50-72, 280-302) vorgesehen ist, indem die polarisierenden Platten (80, 82, 86, 90, 92, 96, 100, 102) nicht vorgesehen sind; wobei ein Code optisch übertragen wird **durch** Lichtstrahlen, die von Bereichen (50, 52, 56, 60, 62, 66, 70, 72) der Hauptoberfläche (44A) reflektiert werden, auf denen die Mehrzahl der polarisierenden Platten (80, 82, 86, 90, 92, 96, 100, 102) vorgesehen ist.

8. Informationsanzeigevorrichtung (22, 262) nach Anspruch 7, die weiterhin aufweist:

   eine Mehrzahl von Unterteilungsteilen (46), die auf der Hauptoberfläche (44A) der reflektierenden Platte (44) mit einem vorbestimmten Zwischenraum vorgesehen sind zum Definieren der Mehrzahl von Bereichen (50-72, 280-302).

9. Informationsanzeigevorrichtung (22, 262) nach Anspruch 8, bei der jede der Mehrzahl von polarisierenden Platten (80, 82, 86, 90, 92, 96, 100, 102) und die lichtabschirmende Platte (88, 98) abnehmbar auf der Mehrzahl von Bereichen (50-72, 280-302) angebracht ist, welche durch die Mehrzahl von Unterteilungsteilen (46) abgeteilt werden.

10. Informationsanzeigevorrichtung (22, 262) nach Anspruch 1, die weiterhin aufweist:

    ein transparentes Abdeckungsteil (42) mit einer Farbe eines ähnlichen Farbtons wie die polarisierenden Platten (80, 82, 86, 90, 92, 96, 100, 102), das vorgesehen ist zum Bedecken der Mehrzahl von polarisierenden Platten (80, 82, 86, 90, 92, 96, 100, 102) und der lichtabschirmenden Platte (88, 90).

11. Optische Informationslesevorrichtung (24, 264), die angepaßt ist zum Empfangen von Licht, das durch eine retroreflektierende Platte reflektiert wird, welche eine Hauptoberfläche und eine Mehrzahl von polarisierenden Platten aufweist, die auf zumindest einem Teil einer Mehrzahl von Bereichen der Hauptoberfläche angeordnet sind, wobei die optische Informationslesevorrichtung aufweist:

eine Mehrzahl von Fotosensoren (132-142) zum Erzeugen eines Lichtempfangssignals, dessen Amplitude entsprechend einer Menge des auftreffenden Lichtes eines bestimmten Wellenlängenbereiches variiert;
eine Mehrzahl von polarisierenden Platten (112-122) mit untereinander unterschiedlichen vorbestimmten Richtungen der Polarisationsachse, die so angeordnet sind, daß sie eine lichtempfangende Oberfläche der Mehrzahl der Fotosensoren (132-142) bedekken;
ein Mittel (200-206) zum Empfangen eines Lichtempfangssignals von einem vorbestimmten ersten Fotosensor (134) unter der Mehrzahl der Fotosensoren (132-142) und zum Feststellen des Vorhandenseins einer Abfolge der gültigen Signalsequenz in dem Lichtempfangssignal von dem ersten Fotosensor (134), wobei der erste Fotosensor (134) mit einer ersten polarisierenden Platte (114) versehen ist, die eine Polarisationsachse einer vorbestimmten Richtung unter der Mehrzahl der polarisierenden Platten (112-122) aufweist;
ein erstes Bestimmungsmittel (208-212, 310-312), das auf die Abfolge der gültigen Signalsequenz reagiert zum Bestimmen eines Decodierverfahrens einer Signalsequenz, die in den Ausgaben der Mehrzahl der Fotosensoren (132-134) enthalten ist; und
ein Mittel (214, 216, 314) zum Decodieren der Signalsequenz, die in den Ausgaben der Mehrzahl der Fotosensoren (132-134) enthalten ist, durch das vorbestimmte Decodierverfahren.

12. Optische Informationslesevorrichtung (24) nach Anspruch 11, bei der
das erste Bestimmungsmittel (208-212) ein zweites Bestimmungsmittel (212, 242-250) aufweist zum Bestimmen eines Decodierverfahrens einer Signalsequenz, die in den Ausgaben der Mehrzahl der Fotosensoren (132-134) enthalten ist, basierend auf einer Amplitude eines Signals an einer vorbestimmten Position in der Abfolge der gültigen Signalsequenz.

13. Optische Informationslesevorrichtung (24) nach Anspruch 12, bei der
die Mehrzahl der Fotosensoren (132-142) eine Mehrzahl von Fotosensorpaaren (132-134, 136-138, 140-142) beinhaltet,
die polarisierenden Platten (112-114, 116-118, 120-122), die entsprechend den beiden Fotosensoren vorgesehen sind, welche in jedem der Mehrzahl der Fotosensorpaare (132-134, 136-138, 140-142) enthalten sind, Richtungen der Polarisationsachsen aufweisen, die so gewählt sind, daß sie einander unter einem vorbestimmten Winkel schneiden;
das zweite Bestimmungsmittel (212, 242-250) ein Mittel (244, 248) zum Auswählen irgendeines der Mehrzahl der Fotosensorpaare basierend auf einer Amplitude eines Signals an einer vorbestimmten Position in der Abfolge der gültigen Signalsequenz beinhaltet; und
das Decodiermittel (214, 216) ein Mittel (214) zum Decodieren einer Signalsequenz von zwei Ausgaben der beiden Fotosensoren beinhaltet, die in dem Fotosensorpaar (132-134, 136-138, 140-142) enthalten sind, das durch das Auswahlmittel (244, 248) ausgewählt wird.

14. Optische Informationslesevorrichtung (24) nach Anspruch 13, bei der
der vorbestimmte Winkel ein rechter Winkel ist.

15. Optische Informationslesevorrichtung (24) nach Anspruch 13, bei der
das Decodiermittel (214) ein Mittel (214) zum Bestimmen eines Codes basierend auf einer Kombination der Amplituden von zwei Ausgaben der beiden Fotosensoren beinhaltet, die in dem Fotosensorpaar (132-134, 136-138, 140-142) enthalten sind, das durch das Auswahlmittel (244, 248) ausgewählt wird.

16. Optische Informationslesevorrichtung (24) nach Anspruch 13, bei der
das Auswahlmittel (244, 248) ein Mittel (244, 248) zum Auswählen irgendeines der Mehrzahl der Fotosensorpaare basierend auf Amplituden der Signale an einer Mehrzahl von Positionen einschließlich vorbestimmter erster und zweiter Positionen in der Abfolge der gültigen Signalsequenz beinhaltet.

17. Optische Informationslesevorrichtung (24) nach Anspruch 16, bei der
die erste Position der Anfang der Abfolge der gültigen Signalsequenz ist.

18. Optische Informationslesevorrichtung (24) nach Anspruch 16, bei der
die zweite Position das Ende der Abfolge der gültigen Signalsequenz ist.

**19.** Optische Informationslesevorrichtung (264) nach Anspruch 11, die weiterhin aufweist:

ein Mittel (270) zum Speichern einer Mehrzahl von Codetabellen (272A-C) bzw. zum Speichern von Kombinationen der Ausgabeamplitudenkombinationen der Mehrzahl der Fotosensoren (132-142) und entsprechender Codes; wobei

das erste Bestimmungsmittel (208-312) ein Mittel (310, 312) zum Bestimmen der Mehrzahl der Codetabellen (272A-C) basierend auf einer Amplitude eines Signals an einer vorbestimmten Position der Abfolge der gültigen Signalsequenz beinhaltet; und

das Decodiermittel (214-218, 314) ein Mittel (216) beinhaltet zum Umwandeln einer Kombination der Amplituden der Signale, die von der Mehrzahl der Fotosensoren (132-142) gleichzeitig mit der Abfolge der gültigen Signalsequenz ausgegeben werden, in einen Code unter Verwendung der Codetabelle (272A-C), die durch das Auswahlmittel (310, 312) ausgewählt ist.

**20.** Optische Informationslesevorrichtung (24) nach Anspruch 18, bei der
der vorbestimmte Winkel ein rechter Winkel ist.

**21.** Optische Informationslesevorrichtung (264) nach Anspruch 18, bei der
das Auswahlmittel (310, 312) ein Mittel (330-338) zum Auswählen irgendeines der Mehrzahl der Fotosensorpaare (132-134, 136-138, 140-142) basierend auf Amplituden der Signale bei einer Mehrzahl von Positionen einschließlich vorbestimmter erster und zweiter Positionen der Abfolge der gültigen Signalsequenz beinhaltet.

**22.** Optische Informationslesevorrichtung (264) nach Anspruch 21, bei der
die erste Position der Anfang der Abfolge der gültigen Signalsequenz ist.

**23.** Optische Informationslesevorrichtung (264) nach Anspruch 21, bei der
die zweite Position das Ende der Abfolge der gültigen Signalsequenz ist.

**24.** Optische Informationslesevorrichtung (24) nach Anspruch 11, bei der
das erste Bestimmungsmittel (208-212) ein zweites Bestimmungsmittel (212) enthält, das auf die Abfolge der gültigen Signalsequenz reagiert zum Bestimmen der relativen Lagebeziehung zwischen der Polarisationsebene des Lichts, das auf die erste polarisierende Platte (114) einfällt, und der Richtung der Polarisationsachse der ersten polarisierenden Platte (114) und zum Bestimmen eines Decodierverfahrens einer Signalsequenz, die in den Ausgaben der Mehrzahl der Fotosensoren enthalten ist.

**25.** Optische Informationslesevorrichtung (350) nach Anspruch 24, die weiterhin aufweist:

ein Mittel (364) zum Ändern der Richtung der Polarisationsachse der ersten polarisierenden Platte (360); und
ein Mittel (366) zum Erfassen der Richtung der Polarisationsachse der ersten polarisierenden Platte (360); wobei
das zweite Bestimmungsmittel ein Bestimmungsmittel enthält, das auf die Abfolge der gültigen Signalsequenz sowie auf eine Ausgabe des Bestimmungsmittels (366) reagiert zum Bestimmen der relativen Lagebeziehung zwischen der Polarisationsebene des Lichts, das auf die erste polarisierende Platte (360) einfällt, und der Richtung der Polarisationsachse der ersten polarisierenden Platte (360) und zum Bestimmen eines Decodierverfahrens einer Signalsequenz, die in den Ausgaben von der Mehrzahl der Fotosensoren (132-134, 362) enthalten ist.

**Revendications**

**1.** Dispositif d'affichage d'informations (22, 262) comprenant :

une pluralité de plaques de polarisation (80, 82, 86, 90, 92, 96, 100, 102) disposées sur au moins une partie d'une pluralité de régions (50-72, 280-302) définies avec un intervalle et une largeur prédéterminés sur une surface principale (44A), chacune des plaques ayant un axe de polarisation égal à n'importe laquelle d'une pluralité de directions différentes ; **caractérisé par** une plaque rétro-réfléchissante (44) ayant la surface principale (44A) ; dans lequel
un code est transmis par voie optique par des faisceaux de lumière réfléchis provenant des régions (50, 52, 56, 60, 62, 66, 70, 72) de ladite surface principale (44A) sur laquelle ladite pluralité de plaques de polarisation (80, 82, 86, 90, 92, 96, 100, 102) sont disposées et des régions (54, 64) de ladite surface principale sur laquelle lesdites plaques de polarisation (80, 82, 86, 90, 92, 96, 100, 102) ne sont pas disposées.

**2.** Dispositif d'affichage d'informations (22, 102) selon la revendication 1, comprenant en outre
un élément de couvercle transparent (42) ayant une couleur de teinte similaire auxdites plaques de polarisation (80, 82, 86, 90, 92, 96, 100, 102), prévu pour couvrir ladite surface principale (44A) et ladite pluralité de plaques de polarisation (80, 82, 86, 90, 92, 96, 100, 102).

3. Dispositif d'affichage d'informations (22, 102) selon la revendication 1, comprenant en outre
une plaque de protection contre la lumière (88, 98) disposée sur au moins une partie de ladite pluralité de régions (50-72, 280-302).

4. Dispositif d'affichage d'informations (22, 102) selon la revendication 3, dans lequel une surface de ladite plaque de protection contre la lumière (88, 98) a une couleur de teinte similaire auxdites plaques de polarisation (80, 82, 86, 90, 92, 96, 100, 102).

5. Dispositif d'affichage d'informations (22, 102) selon la revendication 1, comprenant en outre
une pluralité d'éléments de séparation (46) prévus sur ladite surface principale (44A) de ladite plaque réfléchissante (44) à un intervalle prédéterminé pour définir ladite pluralité de régions (50-72, 280-302).

6. Dispositif d'affichage d'informations selon la revendication 5, dans lequel
chacune parmi ladite pluralité de plaques de polarisation (80, 82, 86, 90, 92, 96, 100, 102) est montée de telle sorte qu'elle peut être détachée sur ladite pluralité de régions (50-72, 280-302) séparées par ladite pluralité d'éléments de séparation (46).

7. Dispositif d'affichage d'informations (22, 262) comprenant :

une pluralité de plaques de polarisation (80, 82, 86, 90, 92, 96, 100, 102) disposées sur au moins une partie d'une pluralité de régions (50-72, 280-302) définies avec un intervalle et une largeur prédéterminés sur une surface principale (44A), chacune des plaques ayant un axe de polarisation égal à n'importe laquelle d'une pluralité de directions différentes ; **caractérisé par** une plaque rétro-réfléchissante (44) ayant la surface principale (44A) ; et
une plaque de protection contre la lumière (88, 98) ayant une couleur de teinte similaire auxdites plaques de polarisation (80, 82, 86, 90, 92, 96, 100, 102), prévue dans n'importe laquelle de ladite pluralité de régions (50-72, 280-302) où lesdites plaques de polarisation (80, 82, 86, 90, 92, 96, 100, 102) ne sont pas prévues ; dans lequel
un code est transmis par voie optique par des faisceaux de lumière réfléchis provenant des régions (50, 52, 56, 60, 62, 66, 70, 72) de ladite surface principale (44A) sur laquelle ladite pluralité de plaques de polarisation (80, 82, 86, 90, 92, 96, 100, 102) sont prévues.

8. Dispositif d'affichage d'informations (22, 262) selon la revendication 7, comprenant en outre
une pluralité d'éléments de séparation (46) prévus sur ladite surface principale (44A) de ladite plaque réfléchissante (44) à un intervalle prédéterminé pour définir ladite pluralité de régions (50-72, 280-302).

9. Dispositif d'affichage d'informations (22, 262) selon la revendication 8, dans lequel
chacune parmi ladite pluralité de plaques de polarisation (80, 82, 86, 90, 92, 96, 100, 102) et ladite plaque de protection contre la lumière (88, 98) est montée de telle sorte qu'elle peut être détachée sur ladite pluralité de régions (50-72, 280-302) séparées par ladite pluralité d'éléments de séparation (46).

10. Dispositif d'affichage d'informations (22, 262) selon la revendication 1, comprenant en outre
un élément de couvercle transparent (42) ayant une couleur de teinte similaire auxdites plaques de polarisation (80, 82, 86, 90, 92, 96, 100, 102), prévu pour couvrir ladite pluralité de plaques de polarisation (80, 82, 86, 90, 92, 96, 100, 102) et ladite plaque de protection contre la lumière (88, 90).

11. Dispositif de lecture d'informations optiques (24, 264) adapté pour recevoir une lumière réfléchie par une plaque rétro-réfléchissante ayant une surface principale et une pluralité de plaques de polarisation disposées sur au moins une partie d'une pluralité de régions de ladite surface principale, ledit dispositif de lecture d'informations optiques comprenant :

une pluralité de capteurs photoélectriques (132-142) pour générer un signal de réception de lumière dont l'amplitude varie avec une quantité de lumière incidente d'une plage de longueurs d'onde spécifique ;
une pluralité de plaques de polarisation (112-122) ayant des directions d'axe de polarisation prédéterminées mutuellement différentes, disposées pour couvrir une surface de réception de lumière de ladite pluralité de capteurs photoélectriques (132-142) ;
un moyen (200-206) pour recevoir un signal de réception de lumière provenant d'un premier capteur photoélectrique prédéterminé (134) parmi ladite pluralité de capteurs photoélectriques (132-142) et pour détecter l'existence d'une série de séquence de signaux valides dans le signal de réception de lumière provenant dudit premier capteur photoélectrique (134), ledit premier capteur photoélectrique (134) étant équipé d'une première plaque de polarisation (114) ayant un axe de polarisation d'une direction prédéterminée parmi ladite pluralité de plaques de polarisation (112-122) ;

un premier moyen de détermination (208-212, 310, 312) sensible à ladite série de séquence de signaux valides pour déterminer un procédé de décodage d'une séquence de signaux incluse dans des sorties provenant de ladite pluralité de capteurs photoélectriques (132-134) ; et

un moyen (214, 216, 314) pour décoder la séquence de signaux incluse dans les sorties de ladite pluralité de capteurs photoélectriques (132-134) par ledit procédé de décodage déterminé.

12. Dispositif de lecture d'informations optiques (24) selon la revendication 11, dans lequel

ledit premier moyen de détermination (208-212) inclut un deuxième moyen de détermination (212, 242-250) pour déterminer un procédé de décodage d'une séquence de signaux incluse dans des sorties provenant de ladite pluralité de capteurs photoélectriques (132-134) en se basant sur une amplitude d'un signal à une position prédéterminée parmi ladite série de séquence de signaux valides.

13. Dispositif de lecture d'informations optiques (24) selon la revendication 12, dans lequel

ladite pluralité de capteurs photoélectriques (132-142) inclut une pluralité de paires de capteurs photoélectriques (132-134, 136-138, 140-142) ;

des plaques de polarisation (112-114, 116-118, 120-122) prévues pour correspondre à deux capteurs photoélectriques inclus dans chacune de ladite pluralité de paires de capteurs photoélectriques (132-134, 136-138, 140-142) ont des directions d'axes de polarisation sélectionnées pour se croiser à un angle prédéterminé ;

ledit deuxième moyen de détermination (212, 242-250) inclut un moyen (244, 248) pour sélectionner n'importe laquelle de ladite pluralité de paires de capteurs photoélectriques en se basant sur une amplitude d'un signal à une position prédéterminée parmi ladite série de séquence de signaux valides ; et

ledit moyen de décodage (214, 216) inclut un moyen (214) pour décoder une séquence de signaux provenant de deux sorties des deux capteurs photoélectriques inclus dans la paire de capteurs photoélectriques (132-134, 136-138, 140-142) sélectionnée par ledit moyen de sélection (244, 248).

14. Dispositif de lecture d'informations optiques (24) selon la revendication 13, dans lequel

ledit angle prédéterminé est un angle droit.

15. Dispositif de lecture d'informations optiques (24) selon la revendication 13, dans lequel

ledit moyen de décodage (214) inclut un moyen (214) pour déterminer un code en se basant sur une combinaison d'amplitudes de deux sorties des deux capteurs photoélectriques inclus dans la paire de capteurs photoélectriques (132-134, 136-138, 140-142) sélectionnée par ledit moyen de sélection (244, 248).

16. Dispositif de lecture d'informations optiques (24) selon la revendication 13, dans lequel

ledit moyen de sélection (244, 248) inclut un moyen (244, 248) pour sélectionner n'importe laquelle de ladite pluralité de paires de capteurs photoélectriques en se basant sur des amplitudes de signaux à une pluralité de positions incluant les première et deuxième positions prédéterminées, de ladite série de séquence de signaux valides.

17. Dispositif de lecture d'informations optiques (24) selon la revendication 16, dans lequel

ladite première position est la tête de ladite série de séquence de signaux valides.

18. Dispositif de lecture d'informations optiques (24) selon la revendication 16, dans lequel

ladite deuxième position est la queue de ladite série de séquence de signaux valides.

19. Dispositif de lecture d'informations optiques (264) selon la revendication 11, comprenant en outre

un moyen (270) pour stocker une pluralité de tableaux de codes (272A-C) stockant respectivement des combinaisons de combinaisons d'amplitudes de sortie provenant de ladite pluralité de capteurs photoélectriques (132-142) et des codes correspondants ; dans lequel

ledit premier moyen de détermination (208, 312) inclut un moyen (310, 312) pour déterminer un de ladite pluralité de tableaux de codes (272A-C) en se basant sur une amplitude d'un signal à une position prédéterminée de ladite série de séquence de signaux valides ; et

ledit moyen de décodage (214-218, 314) inclut un moyen (216) pour convertir une combinaison d'amplitudes de signaux délivrés provenant de ladite pluralité de capteurs photoélectriques (132-142) simultanément avec ladite série de séquence de signaux valides en un code, en utilisant le tableau de codes (272A-C) sélectionné par ledit moyen de sélection (310, 312).

20. Dispositif de lecture d'informations optiques (24) selon la revendication 18, dans lequel

ledit angle prédéterminé est un angle droit.

21. Dispositif de lecture d'informations optiques (264) selon la revendication 18, dans lequel

ledit moyen de sélection (310, 312) inclut un moyen (330-338) pour sélectionner n'importe laquelle de ladite pluralité de paires de capteurs photoélectriques (132-134, 136-138, 140-142) en se basant sur des amplitudes de signaux à une pluralité de positions incluant des première et deuxième positions prédéterminées, de ladite série de séquence de signaux valides.

22. Dispositif de lecture d'informations optiques (264) selon la revendication 21, dans lequel ladite première position est la tête de ladite série de séquence de signaux valides.

23. Dispositif de lecture d'informations optiques (264) selon la revendication 21, dans lequel ladite deuxième position est la queue de ladite série de séquence de signaux valides.

24. Dispositif de lecture d'informations optiques (24) selon la revendication 11, dans lequel ledit premier moyen de détermination (208-212) inclut un deuxième moyen de détermination (212) sensible à ladite série de séquence de signaux valides, pour déterminer une relation de position relative entre un plan de polarisation de lumière incidente sur ladite première plaque de polarisation (114) et la direction de l'axe de polarisation de ladite première plaque de polarisation (114) et pour déterminer un procédé de décodage d'une séquence de signaux incluse dans des sorties provenant de ladite pluralité de capteurs photoélectriques.

25. Dispositif de lecture d'informations optiques (350) selon la revendication 24, comprenant en outre :

un moyen (364) pour changer une direction de l'axe de polarisation de ladite première plaque de polarisation (360) ; et
un moyen (366) pour détecter une direction de l'axe de polarisation de ladite première plaque de polarisation (360) ; dans lequel ledit deuxième moyen de détermination inclut un moyen de détermination sensible à ladite série de séquence de signaux valides et à une sortie dudit moyen de détection (366), pour déterminer une relation de position relative entre un plan de polarisation de lumière incidente sur ladite première plaque de polarisation (360) et la direction de l'axe de polarisation de ladite première plaque de polarisation (360) et pour déterminer un procédé de décodage d'une séquence de signaux incluse dans des sorties provenant de ladite pluralité de capteurs photoélectriques (132-134, 362).

FIG.1

FIG.2

## FIG.3

# FIG.4

(a)

50 52 54 56 58 60 62 64 66 68 70 72
(80)(82) (86)(88)(90)(92) (96)(98)(100)(102)

(b)

(c)

(d)

(e)

(f) 0 1 1 0 0 1 0 1 1 0 1 0
(g) 1 0 1 1 0 0 1 1 0 0 0 1

(h)

⊘ : 00
↔ : 01
↕ : 10
○ : 11

# FIG.5

## FIG.6

## FIG.7

## FIG.8

## FIG.9

```
        ╭─────────────────────╮
        │  DETERMINE PHOTO     │
        │   SENSOR PAIR        │
        ╰─────────────────────╯
                  │
                  ▼           ┌─242
        ┌─────────────────────┐
        │   FIRST PHOTO        │
        │   SENSOR PAIR        │
        └─────────────────────┘
                  │
                  ▼           ┌─244
              ◇─────────◇
            ◇             ◇
          ◇   $a_2 > a_1$ ?  ◇────── NO ──┐
            ◇             ◇               │
              ◇─────────◇                 │
                  │                       │
                 YES          ┌─246       │
                  ▼                       │
        ┌─────────────────────┐           │
        │   SECOND PHOTO       │          │
        │   SENSOR PAIR        │          │
        └─────────────────────┘          │
                  │                       │
                  ▼           ┌─248       │
              ◇─────────◇                 │
            ◇             ◇               │
          ◇   $a_3 > a_1$ ?  ◇────── NO ──┤
            ◇             ◇               │
              ◇─────────◇                 │
                  │                       │
                 YES          ┌─250       │
                  ▼                       │
        ┌─────────────────────┐           │
        │   THIRD PHOTO        │          │
        │   SENSOR PAIR        │          │
        └─────────────────────┘          │
                  │                       │
                  ▼                       │
        ╭─────────────────────╮           │
        │        END          │           │
        ╰─────────────────────╯           │
```

## Fig.10

# FIG.11

272A

| | | | | CODE |
|---|---|---|---|---|
| (hatched circle) | 00 | 00 | 00 | 000 |
| ↔ | 03 | 12 | 12 | 001 |
| ↗ | 12 | 21 | 03 | 010 |
| ↖↘ | 21 | 30 | 12 | 011 |
| ↕ | 30 | 21 | 21 | 100 |
| ↘ | 21 | 12 | 30 | 101 |
| ↖ | 12 | 03 | 21 | 110 |
| ○ | 33 | 33 | 33 | 111 |

# FIG.12

262

(a)

280 282 284 286 288 290 292 294 296 298 300 302

(b)

(c)

(d)

(e)

(f)   0 1 3 1 1 2 0 3 3 0 1 0

(g)   3 2 3 2 2 1 3 3 0 0 2 3

## FIG.13

```
        ┌─────────────┐
        │    START    │
        └─────────────┘
               │
               ▼
         ╱──────────╲  ╱ 200
        ╱   INPUT?    ╲──── NO ────┐
        ╲             ╱            │
         ╲──────────╱             │
               │                  │
              YES                 │
               │                  │
               ▼                  │
        ┌─────────────┐ ╱ 202     │
        │  SAMPLING   │           │
        └─────────────┘   NO      │
               │         │        │
               ▼         │        │
         ╱──────────╲ ╱ 204       │
        ╱ PRESCRIBED ╲           │
        ╲ TIME PASSED ╱──────────┘
        ╲     ?     ╱
         ╲──────────╱          ┌──────────┐ ╱ 220
               │               │  ERASE   │
              YES              │  BUFFER  │
               │               └──────────┘
               ▼                    ▲
         ╱──────────╲ ╱ 206         │
        ╱ TWO OR MORE ╲             │
        ╲   INPUTS?   ╱──── NO ─────┤
         ╲──────────╱               │
               │                    │
              YES                   │
               │                    │
               ▼                    │
        ┌─────────────┐ ╱ 208       │
        │ CALCULATE TIME│           │
        │ PER ONE BAR  │            │
        └─────────────┘             │
               │                    │
               ▼                    │
        ┌─────────────┐ ╱ 310       │
        │ CHECK MARKER │            │
        └─────────────┘             │
               │                    │
               ▼                    │
        ┌─────────────┐ ╱ 312       │
        │DETERMINE TABLE│           │
        │ TO BE USED   │            │
        └─────────────┘             │
               │                    │
               ▼                    │
        ┌─────────────┐ ╱ 314       │
        │DETERMINE CODE│            │
        └─────────────┘             │
               │                    │
               ▼                    │
        ┌─────────────┐ ╱ 216       │
        │  RETRIEVE   │             │
        │CORRESPONDING│             │
        │ INFORMATION │             │
        │ FROM MEMORY │             │
        └─────────────┘             │
               │                    │
               ▼                    │
        ┌─────────────┐ ╱ 218       │
        │   DISPLAY   │             │
        └─────────────┘             │
               │                    │
               └────────────────────┘
```

## FIG.14

```
┌─────────────────────┐
│  DETERMINE TABLE    │
│  TO BE USED         │
└─────────────────────┘
          │
          ▼           ┌─330
┌─────────────────────┐
│    FIRST TABLE      │
└─────────────────────┘
          │
          ▼          ┌─332
        ◇ "2312"? ◇──────── NO ─┐
          │                      │
         YES        ┌─334        │
          ▼                      │
┌─────────────────────┐          │
│   SECOND TABLE      │          │
└─────────────────────┘          │
          │                      │
          ▼          ┌─336       │
        ◇ "2132"? ◇──────── NO ─┤
          │                      │
         YES        ┌─338        │
          ▼                      │
┌─────────────────────┐          │
│    THIRD TABLE      │          │
└─────────────────────┘          │
          │                      │
          ▼                      │
┌─────────────────────┐
│        END          │
└─────────────────────┘
```

# FIG.15